# EUROPEAN PATENT APPLICATION

(11) **EP 4 653 691 A1**
(43) Date of publication of application: **26.11.2025**
(21) Application number: 23932151.6
(22) Date of filing: 05.12.2023
(51) Int. Cl.: F03D 1/06, B05B 12/00, F03D 80/00

(54) **METHOD AND DEVICE FOR CONSTRUCTING LEADING EDGE PROTECTIVE LAYER OF WIND TURBINE BLADE**

(30) Priority: 07.04.2023 JP 2023062702
(71) Applicant: Mitsubishi Heavy Industries, Ltd., Tokyo 100-8332 (JP)
(72) Inventor: SHIBATA, Masaaki, Tokyo 100-8332 (JP); TAKAYANAGI, Kazufumi, Tokyo 100-8332 (JP); KOREMATSU, Yasuhiro, Tokyo 100-8332 (JP); OKANO, Yasushi, Tokyo 100-8332 (JP); YAMADA, Tomokazu, Tokyo 100-8332 (JP)
(74) Representative: Cabinet Beau de Loménie
(86) International application number: PCT/JP2023/043467
(87) International publication number: WO 2024/209742

(57) **Abstract**

Provided are a method and a device for constructing a leading edge protective layer of a wind turbine blade, with which the layer thickness of a protective layer (layer thickness of each pass layer) can be ascertained and managed in real time during a construction process. The method for constructing a leading edge protective layer is used to construct a protective layer (30) that is composed of a plurality of pass layers and is constructed on the leading edge of a wind turbine blade body (5a) formed of FRP, wherein a measurement is taken of a difference in level between a pass layer constructed region (Ra) in which an nth pass layer formed through an nth instance of construction is constructed and a pass layer non-constructed region (Rb) which is adjacent to the pass layer constructed region (Ra) and in which the nth pass layer is not yet constructed, where n is a natural number.

## Description

### Technical Field

The present disclosure relates to a leading edge protective layer forming method and a leading edge protective layer forming device for a wind turbine blade.

### Background Art

As a wind turbine rotor is rotated, a wind turbine blade collides with foreign substances (for example, raindrops, dust, and the like) in the air and is eroded. As a result, erosion occurs in a region including a leading edge of the wind turbine blade.

In order to protect the wind turbine blade from the erosion, a technique is known for forming a protective layer having erosion resistance in the region of the wind turbine blade (see PTL 1).

### Citation List

### Patent Literature

[PTL 1] Japanese Unexamined Patent Application Publication No. 2022-175830

### Summary of Invention

### Technical Problem

The protective layer is formed by laminating a plurality of pass layers, and it is preferable that the protective layer has a uniform layer thickness over the entire formation region after the formation. Therefore, it is desirable to ascertain and manage the layer thickness of the protective layer (the layer thickness of each pass layer) in real time.

The present disclosure has been made in view of these circumstances, and an object of the present disclosure is to provide a leading edge protective layer forming method and a leading edge protective layer forming device for a wind turbine blade that can ascertain and manage a layer thickness of a protective layer (a layer thickness of each pass layer) in real time during a forming process.

### Solution to Problem

In order to achieve the above object, a leading edge protective layer forming method and a leading edge protective layer forming device for a wind turbine blade according to the present disclosure adopt the following means.

According to an aspect of the present disclosure, there is provided a leading edge protective layer forming method for a wind turbine blade that forms a protective layer composed of a plurality of pass layers on a leading edge of a wind turbine blade main body made of FRP, the leading edge protective layer forming method including measuring a step between a pass layer formed region in which an n-th pass layer, where n is a natural number, is formed by n-th thermal spraying and a pass layer unformed region in which the n-th pass layer is not formed and which is adjacent to the pass layer formed region.

In addition, according to another aspect of the present disclosure, there is provided a leading edge protective layer forming device for forming a protective layer on a leading edge of a wind turbine blade main body made of FRP, the leading edge protective layer forming device including: a spray gun that sprays a flame including a forming material; and a displacement sensor that measures a height of a step, in which the displacement sensor measures a step between a pass layer formed region in which an n-th pass layer, where n is a natural number, is formed by n-th thermal spraying and a pass layer unformed region in which the n-th pass layer is not formed and which is adjacent to the pass layer formed region.

### Advantageous Effects of Invention

It is desirable to ascertain and manage the layer thickness of the protective layer (the layer thickness of each pass layer) in real time during the forming process.

### Brief Description of Drawings

Fig. 1 is a schematic diagram showing a configuration of a wind power generation device using a wind turbine blade in which a protective layer is formed according to a first embodiment of the present disclosure.
Fig. 2 is a plan view showing the wind turbine blade in which the protective layer is formed according to the first embodiment of the present disclosure.
Fig. 3 is a partially enlarged plan view showing a tip of the wind turbine blade in which the protective layer is formed according to the first embodiment of the present disclosure.
Fig. 4 is a side view showing a leading edge protective layer forming device according to the first embodiment of the present disclosure.
Fig. 5 is a plan view showing the leading edge protective layer forming device shown in Fig. 4.
Fig. 6 is a cross-sectional view showing the protective layer (in a case of a first pass layer) and a wind turbine blade main body taken along a cutting line VI-VI shown in Fig. 5.
Fig. 7 is a cross-sectional view showing the protective layer (in a case of first to n-th pass layers) and the wind turbine blade main body at the same position as in Fig. 6.
Fig. 8 is a cross-sectional view showing a protective layer and a wind turbine blade main body according to a second embodiment at the same position as in Fig. 6.
Fig. 9 is a cross-sectional view showing a protective layer and a wind turbine blade main body according to a modification example at the same position as in Fig. 6. Description of Embodiments

### [First Embodiment]

Hereinafter, a first embodiment of the present disclosure will be described with reference to the drawings.

### <Configuration of Wind Turbine Blade>

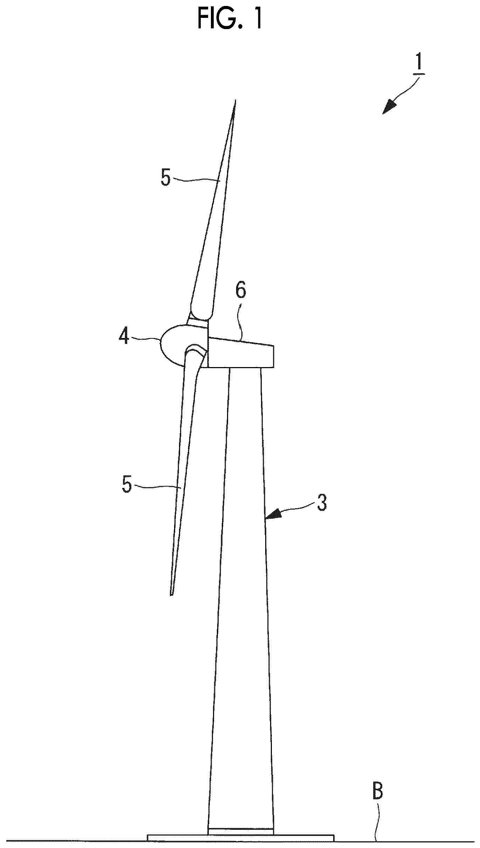

As shown in Fig. 1, a wind power generation device 1 includes a tower 3 that is erected on an installation surface B, a nacelle 6 that is installed at an upper end of the tower 3, and a rotor head 4 that is provided in the nacelle 6 so as to be rotatable around a substantially horizontal axis.

A plurality of (for example, three) wind turbine blades 5 are attached to the rotor head 4 radially around a rotational axis of the rotor head.

Therefore, the force of wind that has hit the wind turbine blade 5 in a direction of the rotational axis of the rotor head 4 is converted into power for rotating the rotor head 4 around the rotational axis. The obtained power is converted into electric power by a generator (not shown) and is supplied to the outside.

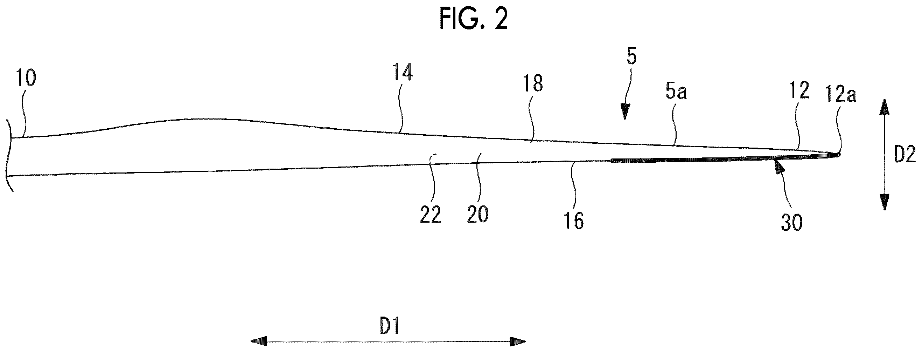

As shown in Fig. 2, the wind turbine blade 5 extends in a wing spanwise direction D1 along a radial direction with respect to the rotor head 4 and has a blade root portion 10 that is attached to the rotor head 4, a blade tip portion 12 that is located farthest from the rotor head 4, and an airfoil portion 14 that extends between the blade root portion 10 and the blade tip portion 12.

The wind turbine blade 5 has a leading edge 16 and a trailing edge 18 from the blade root portion 10 to the blade tip portion 12.

An outer shape of the wind turbine blade 5 is defined by a pressure-side surface 20, which is a pressure surface (positive pressure surface), and a suction-side surface 22 which is a suction surface facing the pressure-side surface 20.

The wind turbine blade 5 is made of fiber-reinforced plastic (FRP).

Carbon fiber reinforced plastic (CFRP), glass fiber reinforced plastic (GFRP), or the like is used as the FRP.

The overall length of the wind turbine blade 5 from the blade root portion 10 to the blade tip portion 12 is a 100-m class and is, for example, equal to or greater than 80 m and equal to or less than 150 m. In addition, a wind turbine blade of 200 m class may be adopted as the wind turbine blade 5 according to the present embodiment.

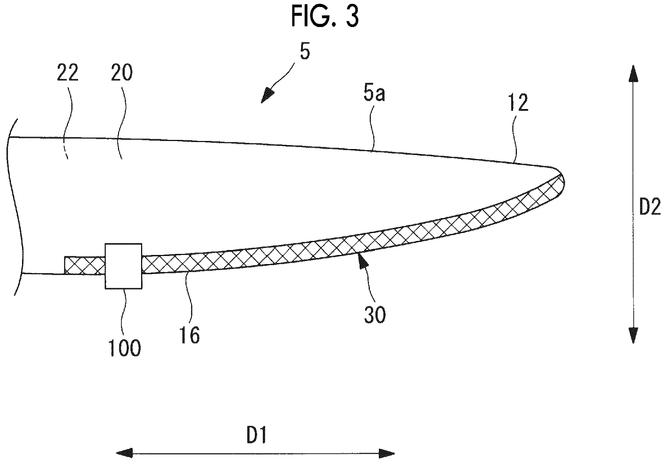

As shown in Figs. 2 and 3, a protective layer 30 is formed in a predetermined region (leading edge portion), which includes the blade tip portion 12 and the leading edge 16 of the wind turbine blade 5, in a wind turbine blade main body 5a. The protective layer 30 is formed by a leading edge protective layer forming device 100 (hereinafter, simply referred to as a "forming device 100") that is moved by a robot (not shown) or the like.

A formation range of the protective layer 30 is represented by a thick line in Fig. 2 and is represented by cross-hatching in Fig. 3.

The formation range of the protective layer 30 in the wing spanwise direction D1 is 20 m to 40 m, preferably about 30 m, from a tip 12a of the blade tip portion 12. In addition, the formation range of the protective layer 30 is not limited thereto. For example, the formation range is a range of about 1/3 of the overall length of the wind turbine blade 5 from the tip of the wind turbine blade 5 in a region in which a circumferential speed exceeds 90 m/s.

The protective layer 30 is made of materials having high wear resistance which include a cermet and a Co alloy, such as a Co (cobalt)-based alloy.

The protective layer 30 is formed by, for example, high velocity oxy-fuel (HVOF) spraying.

The protective layer 30 is composed of a plurality of pass layers. Specifically, the protective layer 30 is configured by laminating pass layers from a first pass layer 31 formed on a surface of the wind turbine blade main body 5a or on a base formed on the surface to an N-th pass layer 30N (a pass layer formed by an N-th forming operation), such as the first pass layer 31, a second pass layer 32 formed on the first pass layer 31, ... (N: a natural number equal to or greater than 2).

### <For Forming Device>

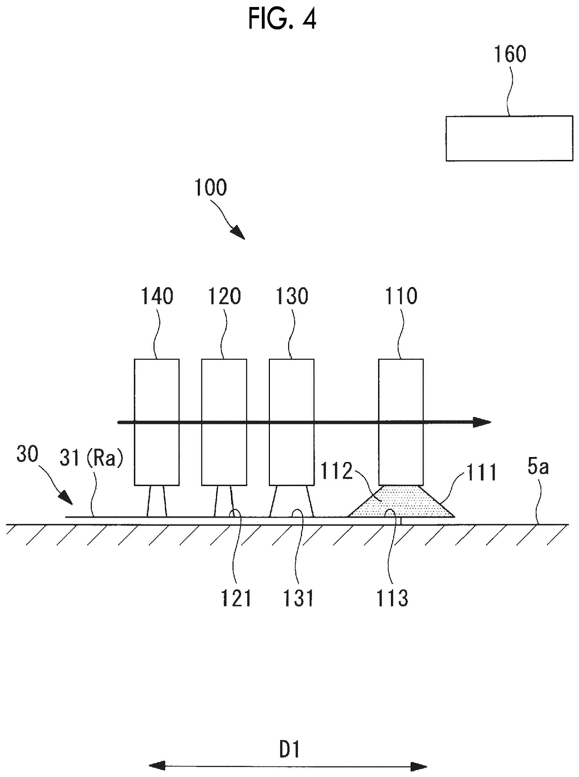

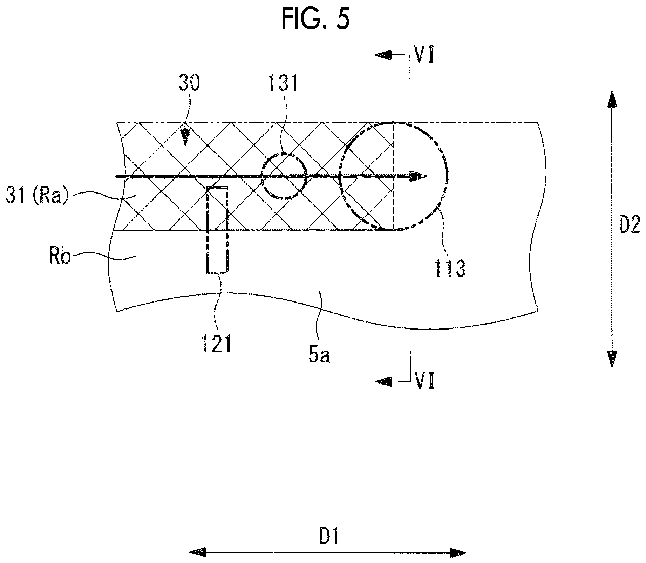

As shown in Figs. 4 and 5, the forming device 100 includes a spray gun 110 and a displacement sensor 120.

The spray gun 110 and the displacement sensor 120 are moved by a robot (not shown) while maintaining a constant interval therebetween.

The spray gun 110 is a device that sprays a flame 111 including a forming material 112 to spray the forming material 112 to a formation target (wind turbine blade main body 5a). In Fig. 5, the range of the flame 111 sprayed to the formation target is referred to as a flame range 113. Here, the flame 111 is a combustion flame produced by an oxygen containing gas and a fuel.

The spray gun 110 sprays the flame 111 including the forming material 112 to the wind turbine blade main body 5a while being moved, for example, along the wing spanwise direction D1. At this time, the entire region in which the forming material 112 has been formed (thermally sprayed) to be attached by one movement (that is, one pass) of the spray gun 110 along a predetermined direction is referred to as a "pass layer".

The displacement sensor 120 is a device (sensor) that measures a step.

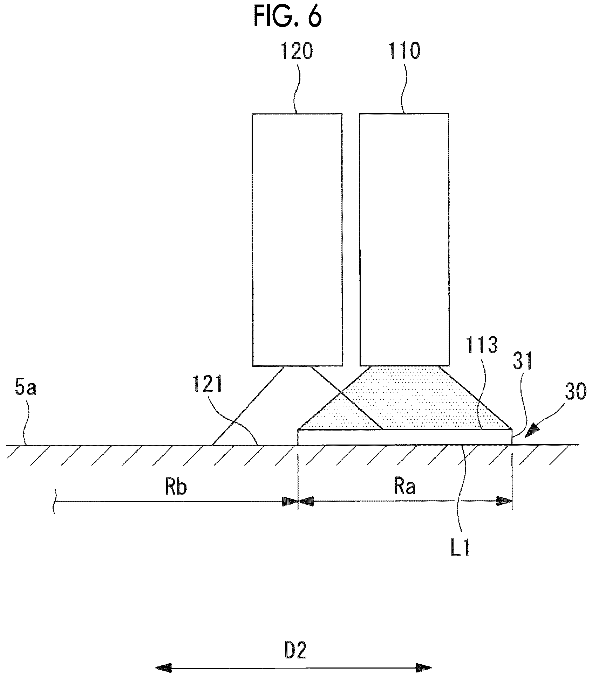

For example, as shown in Figs. 5 and 6, the displacement sensor 120 measures a step between a pass layer formed region Ra in which the first pass layer 31 is formed and a pass layer unformed region Rb in which the first pass layer 31 is not formed. At this time, the pass layer unformed region Rb is adjacent to the first pass layer 31, that is, the pass layer formed region Ra in a wing chordwise direction D2. Here, the wing chordwise direction D2 is a direction substantially orthogonal to the wing spanwise direction D1.

Here, since one pass layer is the entire region in which the forming material 112 is sparsely attached, the pass layer may not have a uniform layer thickness along a pass direction of the spray gun 110. Therefore, for example, the representative layer thickness of the pass layer may be obtained by averaging the layer thicknesses of portions in the pass direction of the pass layer.

Further, the pass layer unformed region Rb in the present embodiment is the surface of the wind turbine blade main body 5a or the base formed on the surface.

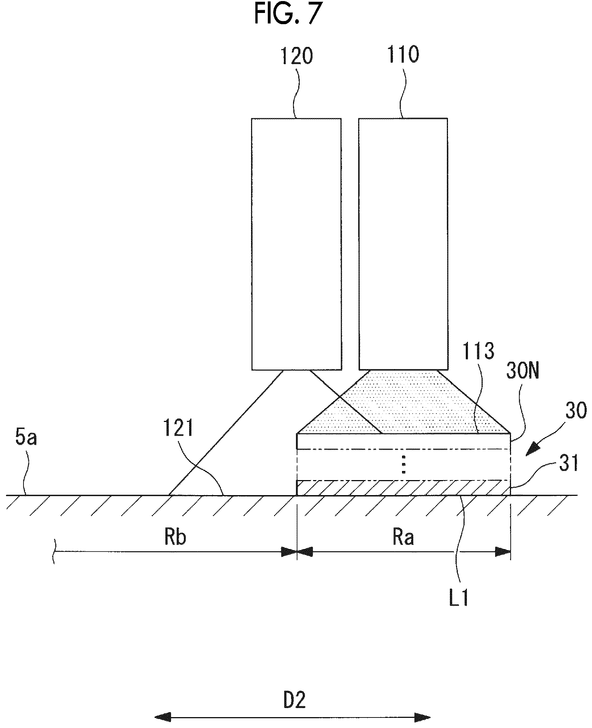

As described above, the protective layer 30 is configured as a laminate of a plurality of pass layers. Therefore, the step between the pass layer formed region Ra in which the N-th pass layer 30N, which is the outermost surface, is formed and the pass layer unformed region Rb may be measured as shown in Fig. 7 in order to ascertain the final layer thickness of the protective layer 30.

At this time, when the layer thickness of the protective layer 30 is ascertained by the displacement sensor 120 each time one pass layer is formed, the layer thickness of an n-th pass layer can be calculated from the difference between the layer thickness of the protective layer 30 at the time when the n-th pass layer is formed and the layer thickness of the protective layer 30 at the time when an (n-1)-th pass layer is formed (n: a natural number). Further, when n is 1, the (n-1)-th pass layer (0th pass layer) is the surface of the wind turbine blade main body 5a or the base formed on the surface.

In addition, when the layer thickness of the protective layer 30 is ascertained by the displacement sensor 120 for every m passes, the total layer thickness (the layer thickness of m layers) of the pass layers formed by m passes can be calculated from the difference between the layer thickness of the protective layer 30 at the time when the n-th pass layer is formed and the layer thickness of the protective layer 30 at the time when an (n-m)-th pass layer is formed (m: a natural number; and n - m > 0).

Here, since the displacement sensor 120 measures the step between the pass layer formed region Ra and the pass layer unformed region Rb, a displacement measurement range 121 needs to be disposed so as to extend over the pass layer formed region Ra and the pass layer unformed region Rb.

Specifically, it is preferable that the displacement measurement range 121 is disposed at a position that is behind the flame range 113 in a traveling direction of the spray gun 110 and that is offset toward the pass layer unformed region Rb from the spray gun 110. In the present embodiment, since the spray gun 110 is moved along the wing spanwise direction D1, the displacement measurement range 121 is offset toward the pass layer unformed region Rb in the wing chordwise direction D2.

As described above, since the forming device 100 includes the displacement sensor 120, it is possible to ascertain the layer thickness of each pass layer and the layer thickness of the protective layer 30 at the same timing as the layer is formed.

That is, since the layer thickness of each pass layer and the layer thickness of the protective layer 30 are ascertained in real time during the forming process, it is possible to appropriately manage the formation. For example, when there is a region in which the layer thickness of the protective layer 30 is less than a reference layer thickness value, the region can be specified as a re-formation region requiring additional formation.

As shown in Figs. 4 and 5, the forming device 100 may further include a temperature sensor 130 and a cooling unit 140.

The temperature sensor 130 and the cooling unit 140 are moved by a robot (not shown) while maintaining a constant interval from the spray gun 110.

The temperature sensor 130 is a device (sensor) that measures the temperature of the protective layer 30 (pass layer) in a non-contact manner.

It is preferable that the temperature sensor 130 measures the temperature of the protective layer 30 (pass layer) immediately after the protective layer 30 is formed. Therefore, it is preferable to dispose the temperature sensor 130 such that a temperature measurement range 131 is located immediately behind the flame range 113 in the traveling direction of the spray gun 110.

However, when the temperature measurement range 131 is too close to the flame range 113, it is not possible to accurately measure the temperature due to thermal influence from the flame 111. Therefore, it is preferable to dispose the temperature sensor 130 such that at least the temperature measurement range 131 does not overlap the flame range 113.

The cooling unit 140 is, for example, a device that blows gas to the protective layer 30 (pass layer) to cool the protective layer 30 (pass layer).

The cooling unit 140 is configured to change cooling capacity based on information from the temperature sensor 130. Specifically, when the measured temperature of the protective layer 30 (pass layer) is equal to or greater than a reference temperature value, the cooling capacity is increased, for example, by increasing the flow rate of the gas or by decreasing the temperature of the gas. The reason is that, when the temperature of the n-th pass layer is high in the formation of the (n+1)-th pass layer on the n-th pass layer, the (n+1)-th pass layer is less likely to be formed.

In addition, a control unit 160 performs the control of each device constituting the forming device 100, the control of the robot and the like, and the calculation of necessary numerical values.

The control unit 160 includes, for example, a central processing unit (CPU: a processor), a main memory, a secondary storage (memory), and the like. Further, the control unit 160 may include a communication unit for transmitting and receiving information to and from other devices.

The main memory is configured as, for example, a writable memory, such as a cache memory or a random access memory (RAM), and is used as a work area for performing the reading of an execution program of the CPU, the writing of processing data by the execution program, and the like.

The secondary storage is a non-transitory computer readable storage medium. The secondary storage is, for example, a magnetic disk, a magneto-optical disk, a CD-ROM, a DVD-ROM, a semiconductor memory, or the like.

As an example, a series of processes for implementing various functions is stored in the secondary storage in the form of a program, and the CPU reads out the program into the main memory and executes information processing and arithmetic processing to implement various functions. In addition, the following forms may be applied: a form in which the program is installed in advance in the secondary storage; a form in which the program is provided in a state in which the program is stored in a computer-readable storage medium; and a form in which the program is distributed via wired or wireless communication means. Examples of the computer-readable storage medium include a magnetic disk, a magneto-optical disk, a CD-ROM, a DVD-ROM, and a semiconductor memory.

According to the present embodiment, the following effects are obtained.

The step between the pass layer formed region Ra in which the n-th pass layer is formed and the pass layer unformed region Rb can be measured as the layer thickness of the protective layer 30 at the stage where the n-th forming operation is ended.

In addition, the layer thickness of the n-th pass layer can also be calculated based on the layer thickness of the protective layer 30 at the stage where the n-th forming operation is ended and the layer thickness of the protective layer 30 at the stage where an (n-1)-th forming operation is ended.

Further, the total layer thickness (the layer thickness of m layers) of the pass layers formed by m passes can be calculated based on the layer thickness of the protective layer 30 at the stage where the n-th forming operation is ended and the layer thickness of the protective layer 30 at the stage where an (n-m)-th forming operation is ended.

Furthermore, when the region in which the layer thickness of the protective layer 30 is less than the reference layer thickness value is specified as the re-formation region requiring additional formation, a pass layer can be further formed in the re-formation region such that the layer thickness of the protective layer 30 in the re-formation region is equal to or greater than the reference layer thickness value.

In addition, when the measured temperature of the protective layer 30 (n-th pass layer) is equal to or greater than the reference temperature value, the cooling capacity for the n-th pass layer, whose temperature has been measured, can be increased to reliably cool the range of the n-th pass layer in which the temperature is high. When the temperature of the n-th pass layer is high in the formation of the (n+1)-th pass layer on the n-th pass layer, the (n+1)-th pass layer is less likely to be formed. However, the range of the n-th pass layer in which the temperature is high can be reliably cooled to reduce the probability of the above phenomenon occurring.

In addition, since the temperature measurement range 131 of the temperature sensor 130 is disposed so as not to overlap the flame range 113 of the flame 111, it is possible to reduce the thermal influence of the flame 111 on the temperature measurement range 131.

### [Second Embodiment]

Hereinafter, a second embodiment of the present disclosure will be described with reference to the drawings.

In addition, the same configurations as those in the first embodiment will be denoted by the same reference numerals, and a description thereof will be omitted.

In the first embodiment, after the protective layer 30 in one row along the wing spanwise direction D1 is formed, the spray gun 110 is moved in the wing chordwise direction D2. Then, the protective layer 30 in one row along the wing spanwise direction D1 is formed as the protective layer 30 in the next row. This is repeated to form the protective layer 30 having a predetermined thickness over the entire formation range.

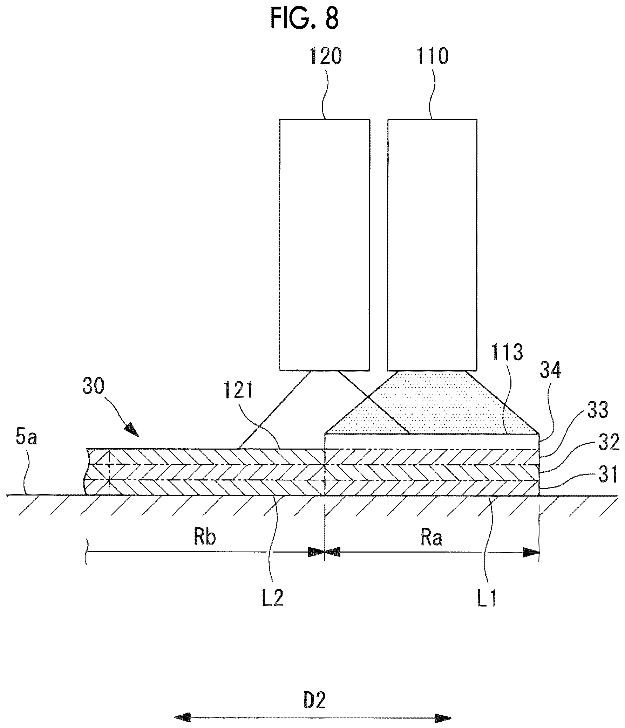

In contrast, in the present embodiment, as shown in Fig. 8, after a first pass layer 31 in one row along the wing spanwise direction D1 is formed, the spray gun 110 is moved in the wing chordwise direction D2. Then, the first pass layer 31 in one row along the wing spanwise direction D1 is formed as the first pass layer 31 in the next row. This is repeated to form the first pass layer 31 over the entire formation range. Then, a second pass layer 32, a third pass layer 33, ... are sequentially laminated by the same process. Finally, the protective layer 30 having a predetermined thickness is formed over the entire formation range.

Therefore, when the pass layer that is being formed is an n-th pass layer, the pass layer unformed region Rb in the present embodiment is a surface of an (n-1)-th pass layer. As a result, a step measured by the displacement sensor 120 is always the layer thickness of the n-th pass layer.

At this time, the layer thickness of each of the layers from the first pass layer 31 to the n-th pass layer is ascertained, and the layer thicknesses of these layers can be integrated to calculate the layer thickness of the protective layer 30 at the time point when the n-th pass layer is formed.

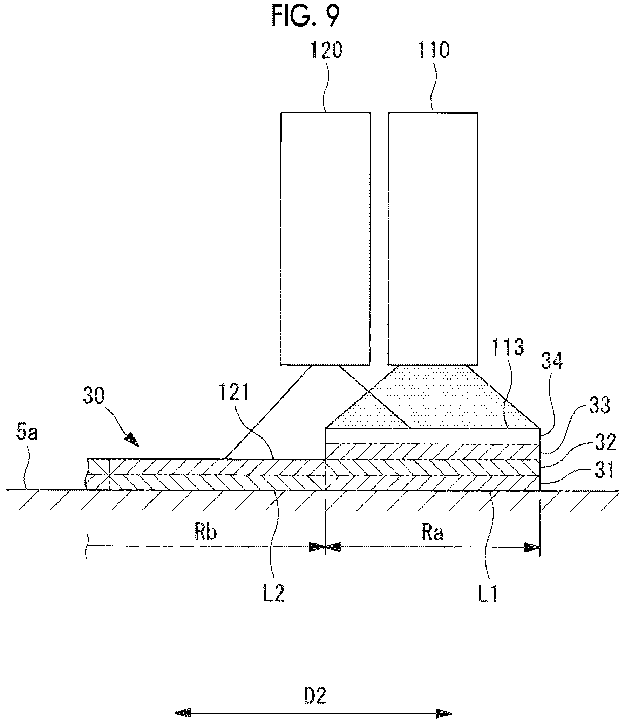

For example, as shown in Fig. 9, when a fourth pass layer 34 in a first row L1 is formed, the pass layer formed region Ra is a region in which the fourth pass layer 34 is formed, and the pass layer unformed region Rb is a region in which the third pass layer 33 is formed (specifically, a region in which the third pass layer 33 in a second row L2 is formed). Then, the displacement sensor 120 measures a step between the fourth pass layer 34 and the third pass layer 33, that is, the layer thickness of the fourth pass layer 34.

In addition, the layer thicknesses of the layers from the first pass layer 31 to the fourth pass layer 34 can be integrated to calculate the layer thickness of the protective layer 30 at the time when the fourth pass layer 34 is formed.

Further, only when the pass layer that is being formed is the first pass layer 31, the pass layer unformed region Rb in the present embodiment is the surface of the wind turbine blade main body 5a or the base formed on the surface.

According to the present embodiment, the following effects are obtained.

A step between the pass layer formed region Ra in which the n-th pass layer is formed and the pass layer unformed region Rb can be measured as the layer thickness of the n-th pass layer.

In addition, the layer thickness of the protective layer 30 at a stage where an n-th forming operation is ended can also be calculated based on the layer thickness of each of the layers from the first pass layer 31 to the n-th pass layer.

### [Modification Example]

The first embodiment and the second embodiment may be combined.

For example, as shown in Fig. 9, after the laminated pass layers (in the case of Fig. 9, the first pass layer 31 and the second pass layer 32) in one row along the wing spanwise direction D1 are formed, the spray gun 110 is moved in the wing chordwise direction D2, and the first pass layer 31 and the second pass layer 32 in one row along the wing spanwise direction D1 are formed as the first pass layer 31 and the second pass layer 32 in the next row. This is repeated to form the first pass layer 31 and the second pass layer 32 over the entire formation range. Then, every two layers, that is, the third pass layer 33 and the fourth pass layer 34, ... may be sequentially laminated over the entire formation range by the same process to finally form the protective layer 30 having a predetermined thickness over the entire formation range.

In addition, the first pass layer 31 and the second pass layer 32 are formed, for example, by reciprocating the spray gun 110.

Further, every three or more pass layers may be sequentially laminated over the entire formation range.

Each of the embodiments described above is understood, for example, as follows.

According to a first aspect of the present disclosure, there is provided a leading edge protective layer forming method for forming a protective layer composed of a plurality of pass layers on a leading edge of a wind turbine blade main body (5a) made of FRP, the leading edge protective layer forming method including measuring a step between a pass layer formed region (Ra) in which an n-th pass layer, where n is a natural number, is formed by an n-th forming operation and a pass layer unformed region (Rb) in which the n-th pass layer is not formed and which is adjacent to the pass layer formed region.

According to the leading edge protective layer forming method of this aspect, the step between the pass layer formed region and the pass layer unformed region is measured. Therefore, when the pass layer unformed region is a region in which the pass layer is not formed, it is possible to measure the layer thickness of the protective layer up to the n-th pass layer. When the pass layer unformed region is a region in which the (n-1)-th pass layer is formed, it is possible to measure the layer thickness of the n-th pass layer.

According to a second aspect of the present disclosure, in the leading edge protective layer forming method according to the first aspect, the pass layer unformed region is a region in which the pass layer is not formed, the step between the pass layer formed region in which the n-th pass layer is formed and the pass layer unformed region is measured as a layer thickness of the protective layer at a stage where the n-th forming operation is ended, and a layer thickness of the n-th pass layer is calculated based on the layer thickness of the protective layer at the stage where the n-th forming operation is ended and a layer thickness of the protective layer at a stage where an (n-1)-th forming operation is ended.

According to the leading edge protective layer forming method of this aspect, when the pass layer unformed region is the region in which the pass layer is not formed, the step between the pass layer formed region in which the n-th pass layer is formed and the pass layer unformed region can be measured as the layer thickness of the protective layer at the stage where the n-th forming operation is ended. In addition, it is also possible to calculate the layer thickness of the n-th pass layer based on the layer thickness of the protective layer at the stage where the n-th forming operation is ended and the layer thickness of the protective layer at the stage where the (n-1)-th forming operation is ended.

According to a third aspect of the present disclosure, in the leading edge protective layer forming method according to the first aspect, the pass layer unformed region is a region in which an (n-1)-th pass layer is formed, the step between the pass layer formed region in which the n-th pass layer is formed and the pass layer unformed region is measured as a layer thickness of the n-th pass layer, and a layer thickness of the protective layer at a stage where the n-th forming operation is ended is calculated based on a layer thickness of each of pass layers from a first pass layer to the n-th pass layer.

According to the leading edge protective layer forming method of this aspect, when the pass layer unformed region is the region in which the (n-1)-th pass layer is formed, the step between the pass layer formed region in which the n-th pass layer is formed and the pass layer unformed region can be measured as the layer thickness of the n-th pass layer. In addition, it is also possible to calculate the layer thickness of the protective layer at a stage where the n-th forming operation is ended, based on the layer thickness of each of the pass layers from the first pass layer to the n-th pass layer.

According to a fourth aspect of the present disclosure, in the leading edge protective layer forming method according to any one of the first to third aspects, a region in which the layer thickness of the protective layer is less than a reference layer thickness value is specified as a re-formation region requiring additional formation.

According to the leading edge protective layer forming method of this aspect, the region in which the layer thickness of the protective layer is less than the reference layer thickness value is specified as the re-formation region requiring additional formation. Therefore, formation can be performed again in the re-formation region such that the layer thickness of the protective layer in the re-formation region is equal to or greater than the reference layer thickness value.

According to a fifth aspect of the present disclosure, the leading edge protective layer forming method according to any one of the first to fourth aspects further includes: measuring a temperature of the n-th pass layer; and increasing a cooling capacity for the n-th pass layer, whose temperature has been measured, when the measured temperature is equal to or greater than a reference temperature value.

According to the leading edge protective layer forming method of this aspect, when the measured temperature is equal to or greater than the reference temperature value, the cooling capacity for the n-th pass layer whose temperature has been measured is increased. Therefore, it is possible to reliably cool the range of the n-th pass layer in which the temperature is high. When the temperature of the n-th pass layer is high in the formation of the (n+1)-th pass layer on the n-th pass layer, the (n+1)-th pass layer is less likely to be formed. However, the range of the n-th pass layer in which the temperature is high can be reliably cooled to reduce the probability of the above phenomenon occurring.

According to a sixth aspect of the present disclosure, there is provided a forming device (100) for forming a protective layer on a leading edge of a wind turbine blade main body made of FRP, the forming device including: a spray gun (110) that sprays a flame (111) including a forming material (112); and a displacement sensor (120) that measures a height of a step, in which the displacement sensor measures a step between a pass layer formed region in which an n-th pass layer, where n is a natural number, is formed by an n-th forming operation and a pass layer unformed region in which the n-th pass layer is not formed and which is adjacent to the pass layer formed region.

According to a seventh aspect of the present disclosure, the forming device according to the sixth aspect further includes: a temperature sensor (130) that measures a temperature of the n-th pass layer; a cooling unit (140) that cools the n-th pass layer whose temperature has been measured by the temperature sensor; and a control unit (160), in which the control unit increases a cooling capacity of the cooling unit when the measured temperature is equal to or greater than a reference temperature value.

According to an eighth aspect of the present disclosure, in the forming device according to the seventh aspect, the temperature sensor is disposed such that a temperature measurement range (131) does not overlap a flame range (113) of the flame sprayed from the spray gun.

According to the forming device of this aspect, since the temperature sensor is disposed such that the temperature measurement range does not overlap the flame range of the flame, it is possible to reduce the thermal influence of the flame on the temperature measurement range.

### Reference Signs List

1 Wind power generation device
3 Tower
4 Rotor head
5 Wind turbine blade
5a Wind turbine blade main body
6 Nacelle
10 Blade root portion
12 Blade tip portion (tip portion)
12a Tip
14 Airfoil portion
16 Leading edge
18 Trailing edge
20 Pressure-side surface
22 Suction-side surface
30 Protective layer
31 First pass layer
32 Second pass layer
33 Third pass layer
34 Fourth pass layer
30N N-th pass layer
100 Forming device
110 Spray gun
111 Flame
112 Forming material
113 Flame range
120 Displacement sensor
121 Displacement measurement range
130 Temperature sensor
131 Temperature measurement range
140 Cooling unit
160 Control unit
B Installation surface
D1 Wing spanwise direction
D2 Wing chordwise direction (chord direction)
L1 First row
L2 Second row
Ra Pass layer formed region
Rb Pass layer unformed region

## Claims

1. A leading edge protective layer forming method for forming a protective layer composed of a plurality of pass layers on a leading edge of a wind turbine blade main body made of FRP, the leading edge protective layer forming method comprising:
measuring a step between a pass layer formed region in which an n-th pass layer, where n is a natural number, is formed by an n-th forming operation and a pass layer unformed region in which the n-th pass layer is not formed and which is adjacent to the pass layer formed region.

2. The leading edge protective layer forming method according to claim 1,
wherein the pass layer unformed region is a region in which the pass layer is not formed,
the step between the pass layer formed region in which the n-th pass layer is formed and the pass layer unformed region is measured as a layer thickness of the protective layer at a stage where the n-th forming operation is ended, and
a layer thickness of the n-th pass layer is calculated based on the layer thickness of the protective layer at the stage where the n-th forming operation is ended and a layer thickness of the protective layer at a stage where an (n-1)-th forming operation is ended.

3. The leading edge protective layer forming method according to claim 1,
wherein the pass layer unformed region is a region in which an (n-1)-th pass layer is formed,
the step between the pass layer formed region in which the n-th pass layer is formed and the pass layer unformed region is measured as a layer thickness of the n-th pass layer, and
a layer thickness of the protective layer at a stage where the n-th forming operation is ended is calculated based on a layer thickness of each of pass layers from a first pass layer to the n-th pass layer.

4. The leading edge protective layer forming method according to claim 1,
wherein a region in which a layer thickness of the protective layer is less than a reference layer thickness value is specified as a re-formation region requiring additional formation.

5. The leading edge protective layer forming method according to claim 1, further comprising:
measuring a temperature of the n-th pass layer; and
increasing a cooling capacity for the n-th pass layer, whose temperature has been measured, when the measured temperature is equal to or greater than a reference temperature value.

6. A leading edge protective layer forming device for forming a protective layer on a leading edge of a wind turbine blade main body made of FRP, the leading edge protective layer forming device comprising:
a spray gun that sprays a flame including a forming material; and
a displacement sensor that measures a height of a step,
wherein the displacement sensor measures a step between a pass layer formed region in which an n-th pass layer, where n is a natural number, is formed by n-th thermal spraying and a pass layer unformed region in which the n-th pass layer is not formed and which is adjacent to the pass layer formed region.

7. The leading edge protective layer forming device according to claim 6, further comprising:
a temperature sensor that measures a temperature of the n-th pass layer;
a cooling unit that cools the n-th pass layer whose temperature has been measured by the temperature sensor; and
a control unit,
wherein the control unit increases a cooling capacity of the cooling unit when the measured temperature is equal to or greater than a reference temperature value.

8. The leading edge protective layer forming device according to claim 7,
wherein the temperature sensor is disposed such that a temperature measurement range does not overlap a flame range of the flame sprayed from the spray gun.
